# FASCICULE DE BREVET EUROPEEN

(11) **EP 3 421 690 B1**
(45) Date de publication et mention de la délivrance du brevet: **15.11.2023**
(21) Numéro de dépôt: 18305806.4
(22) Date de dépôt: 25.06.2018
(51) Int. Cl.: E04H 4/12, C02F 9/00

(54) **MODULE HYDRAULIQUE, FORMANT UN ACCESSOIRE POUR LE CIRCUIT HYDRAULIQUE D'UNE PISCINE**
HYDRAULIKMODUL, DAS EIN ZUBEHÖRTEIL FÜR DEN HYDRAULIKKREISLAUF EINES SCHWIMMBADS BILDET
HYDRAULIC MODULE, FORMING AN ACCESSORY FOR THE HYDRAULIC CIRCUIT OF A SWIMMING POOL

(30) Priorité: 27.06.2017 FR 1755902
(43) Date de publication de la demande: 02.01.2019
(73) Titulaire: ACIS (Aqua Consult Industrie Services), 44310 Saint-Philbert de Grand Lieu (FR)
(72) Inventeur: LIE, Mikaël, 85210 Sainte-Hermine (FR)
(74) Mandataire: Jacobacci Coralis Harle

(56) Documents cités:
- EP-A1- 1 357 088
- DE-U1-202011 000 721
- US-A- 4 661 247
- US-A1- 2009 090 665

## Description

### DOMAINE TECHNIQUE AUQUEL SE RAPPORTE L'INVENTION

La présente invention concerne, de manière générale, le domaine des équipements pour piscine.

Elle concerne plus particulièrement un module hydraulique qui forme un accessoire pour le circuit hydraulique d'une piscine, ledit circuit hydraulique comprenant des canalisations et des moyens de filtration d'eau.

### ARRIERE-PLAN TECHNOLOGIQUE

La qualité de l'eau d'une piscine est un élément fondamental pour le confort de la baignade.

A cet effet, le bassin de la piscine est raccordé à un circuit hydraulique qui est équipé d'un ensemble de filtration destiné à maintenir l'eau propre à la baignade.

Les ensembles de filtration sont généralement intégralement raccordés, élément par élément, à proximité du bassin de la piscine par un installateur.

De manière alternative, cet ensemble de filtration peut consister en un module prémonté à l'avance, comprenant classiquement un châssis support sur lequel sont regroupés :
- un circulateur, destiné à générer une circulation d'eau dans ce circuit hydraulique,
- des moyens de filtration d'eau, et
- une vanne multivoies, destinée à orienter la circulation de l'eau dans le circuit hydraulique. De tels modules hydrauliques sont par exemple connues de DE 20 2011 000721 U1, US 4 661 247 A, EP 1 357 088 A1 et US 2009/090665 A1.

Or, un tel ensemble de filtration est souvent particulièrement encombrant. Il n'est alors pas possible de le faire passer au travers de l'ouverture d'une porte, cela de manière à l'installer dans un local technique.

### OBJET DE L'INVENTION

Afin de remédier à l'inconvénient précité de l'état de la technique, la présente invention propose un nouveau module hydraulique, formant un accessoire pour le circuit hydraulique d'une piscine, ledit circuit hydraulique comprenant des canalisations et des moyens de filtration d'eau.

Le module hydraulique, dépourvu desdits moyens de filtration, comprend un châssis support sur lequel sont regroupés :
- un circulateur, destiné à générer une circulation d'eau dans ledit circuit hydraulique,
- une vanne multivoies, destinée à orienter la circulation dans ledit circuit hydraulique,
- des conduites hydrauliques, qui sont chacune terminées par un organe de raccordement adapté à être connecté auxdites canalisations.

Le châssis support comporte une embase qui forme un piètement adapté à reposer sur le sol et qui porte ledit circulateur.

Le châssis support comporte une paroi verticale arrière, et la vanne multivoies est portée par ladite paroi verticale arrière et/ou ledit circulateur ;

Les organes de raccordement sont agencés, au moins approximativement, dans un même plan vertical.

Le module hydraulique comprend les conduites hydrauliques suivantes :
- au moins une conduite hydraulique raccordée au circulateur, dont l'organe de raccordement est destiné à être raccordé à une canalisation d'aspiration du circuit hydraulique, provenant du bassin de piscine,
- au moins une conduite hydraulique, dont l'organe de raccordement est destiné à être raccordé à une canalisation de refoulement du circuit hydraulique, raccordé au bassin de piscine,
- deux conduites hydrauliques raccordées à la vanne multivoies, dont les organes de raccordement sont destinés à être raccordés aux canalisations aller / retour équipées des moyens de filtration du circuit hydraulique,
- au moins une conduite hydraulique raccordée à la vanne multivoies, dont l'organe de raccordement est destiné à être raccordé à une canalisation de vidange du circuit hydraulique.

Ce module hydraulique, dépourvu desdits moyens de filtration, est ainsi particulièrement compact.

Il peut donc être facilement transporté depuis le site de fabrication jusqu'au site de pose où il est installable dans un emplacement exigu.

L'installateur dispose alors de nombreuses possibilités d'organisation quant au circuit hydraulique de la piscine.

Du fait de son faible encombrement (dont la largeur est avantageusement inférieure, ou égale, à 70 cm), il est alors généralement possible de le faire passer au travers de l'ouverture d'une porte et de l'installer à façon dans la plupart des locaux techniques.

D'autres caractéristiques non limitatives et avantageuses du module hydraulique conforme à l'invention, prises individuellement ou selon toutes les combinaisons techniquement possibles, sont les suivantes :
- le châssis support comporte une paroi verticale latérale, et les organes de raccordement débouchent au travers d'orifices qui sont répartis au niveau de ladite paroi verticale latérale ;
- le module hydraulique comporte encore un tableau de commande, pour le pilotage dudit circuit hydraulique, et/ou des moyens de traitement de l'eau, pour des traitements autres que la filtration, porté(s) avantageusement par une paroi verticale arrière équipant le châssis support ;
- le module hydraulique s'inscrit dans un encombrement horizontal rectangulaire dont les cotes sont au maximum de 0,7 m sur 1 m.

Dans le cas d'un circuit hydraulique d'une piscine comprenant des moyens de chauffage, ledit module comporte encore avantageusement deux conduites hydrauliques, dont les organes de raccordement sont destinés à être raccordés à des canalisations aller / retour équipés desdits moyens de chauffage.

L'invention propose également un circuit hydraulique pour une piscine, comprenant :
- des canalisations,
- un module hydraulique selon l'invention, raccordé auxdites canalisations,
- des moyens de filtration de l'eau de piscine, déportés par rapport audit module hydraulique, et
- éventuellement des moyens de chauffage, déportés par rapport audit module hydraulique.

### DESCRIPTION DETAILLEE D'UN EXEMPLE DE REALISATION

La description qui va suivre en regard des dessins annexés, donnés à titre d'exemples non limitatifs, fera bien comprendre en quoi consiste l'invention et comment elle peut être réalisée.

Sur les dessins annexés :
- la figure 1 est une vue schématique d'un circuit hydraulique qui raccordé au bassin de piscine et qui est équipé du module hydraulique selon l'invention ;
- la figure 2 représente, de manière schématique et en perspective, une forme de réalisation possible d'un module hydraulique conforme à l'invention.

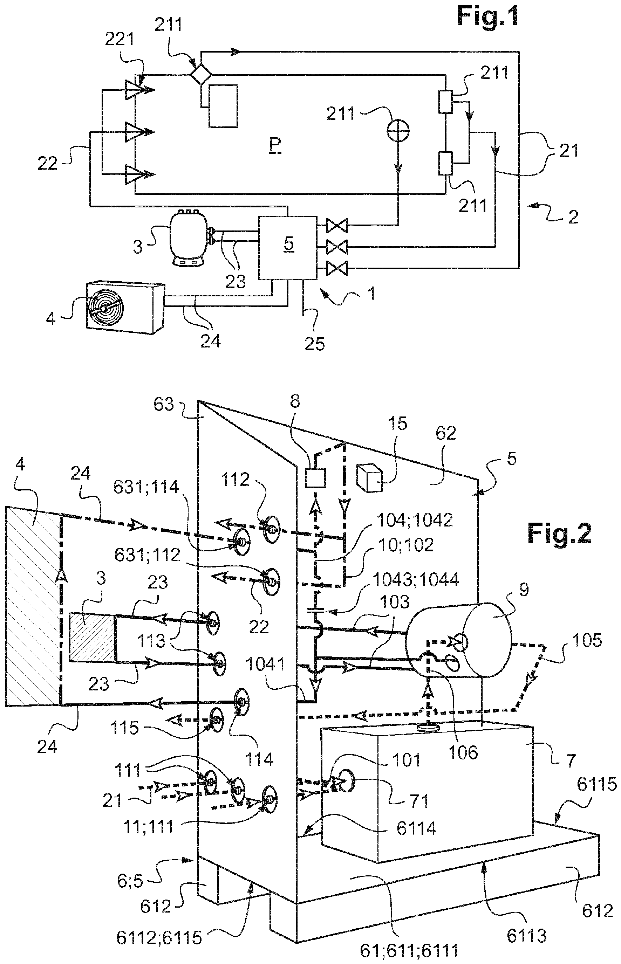

La figure 1 représente, très schématiquement, un circuit hydraulique 1 selon l'invention qui est raccordé à un bassin de piscine P destiné à contenir l'eau pour la baignade.

Dans la suite de la description, les termes « bassin de piscine » et « piscine » sont utilisés indifféremment.

Le circuit hydraulique 1 (ou « réseau hydraulique ») comprend :
- une pluralité de canalisations 2, qui permettent la circulation de l'eau entre le bassin de piscine P et les différents composants qui sont utiles au bon fonctionnement de cette dernière,
- des moyens de filtration 3, pour la filtration de l'eau du bassin de piscine P,
- éventuellement des moyens de chauffage 4, pour le chauffage de l'eau du bassin de piscine P, et
- un module hydraulique 5, déporté par rapport aux moyens de filtration 3 et aux moyens de chauffage 4, pour générer et pour piloter la circulation de l'eau au travers du circuit hydraulique 1.

Les canalisations 2 comprennent en particulier :
- des canalisations d'aspiration 21, dont l'extrémité amont débouche au niveau d'une bouche d'aspiration 211 équipant le bassin de piscine P (par exemple sous la forme d'un écumeur ou « skimmer » en anglais, d'une bonde ou d'une prise balai) et l'extrémité aval découche au sein du module hydraulique 5,
- des canalisations de refoulement 22, dont l'extrémité amont débouche au niveau du module hydraulique 5 et dont l'extrémité aval débouche au niveau de buses de refoulement 221 équipant le bassin de piscine P,
- des premières canalisations aller / retour 23, s'étendant entre les moyens de filtration 3 et le module hydraulique 5,
- des secondes canalisations aller / retour 24, s'étendant entre les moyens de chauffage 4 et le module hydraulique 5, et
- une canalisation d'évacuation 25, pour la mise à l'égout.

Les moyens de filtration 3 sont ici indépendants du module hydraulique 5 ; il est ainsi possible de les installer à façon, en fonction des emplacements disponibles autour du bassin de piscine P.

Ces moyens de filtration 3 s'installent avantageusement dans un local technique, indépendamment du module hydraulique 5, au niveau de la piscine.

Ces moyens de filtration 3 sont avantageusement choisis parmi les filtres à sable ou les filtres à cartouche.

Par « filtre à sable », on entend en particulier une cuve (cylindrique ou sphérique), contenant une masse filtrante (sable, zéolite, verre recyclé, etc.) destinée à être traversée par l'eau du bassin de piscine.

Les moyens de chauffage 4 sont par exemple choisis parmi les pompes à chaleur, les réchauffeurs électriques, les chaudières ou les chauffages solaires.

Le module hydraulique 5 selon l'invention est quant à lui représenté sur la figure 2.

Ce module hydraulique 5, dépourvu des moyens de filtration 3, comprend un châssis support 6 sur lequel sont regroupés plusieurs composants hydrauliques :
- un circulateur 7, destiné à générer la circulation d'eau dans le circuit hydraulique 1,
- des moyens de traitement 8, pour des traitements de l'eau autres que la filtration,
- une vanne multivoies 9, destinée à orienter la circulation de l'eau au sein du module hydraulique 5 et en corollaire dans le circuit hydraulique 1, et
- plusieurs conduites hydrauliques 10.

Le châssis support 6 comporte ici une embase 61 qui forme un piètement adapté à reposer sur le sol et qui porte le circulateur 7.

En l'espèce, l'embase 61 présente la forme générale d'une palette qui comporte un plateau horizontal 611, rectangulaire, présentant deux surfaces opposées :
- une surface supérieure 6111, recevant le circulateur 7, et
- une surface inférieure 6112, équipée de deux longerons 612 destinés à reposer sur le sol.

Le plateau horizontal 611 est encore délimité par deux couples de bordures :
- deux bordures longitudinales, l'une avant 6113 et l'autre arrière 6114, et
- deux bordures latérales 6115.

Ce châssis support 6 comporte ici encore deux parois verticales :
- une paroi verticale arrière 62, s'élevant depuis la bordure longitudinale arrière 6114 du plateau horizontal 611, et
- une paroi verticale latérale 63, s'élevant depuis l'une des bordures latérales 6115 du plateau horizontal 611.

De manière générale, le module hydraulique 5, et en particulier son châssis support 6, s'inscrit dans un encombrement horizontal rectangulaire dont les cotes sont au maximum de 0,7 m (au niveau des bordures latérales 6115) sur 1 m (au niveau des bordures longitudinales 6113, 6114).

Au niveau des bordures latérales 6115, la cote est de préférence comprise entre 400 et 500 mm, par exemple une valeur de 450 mm.

Le circulateur 7, classique en soi, est encore couramment désigné sous le nom de « pompe pour piscine » (fonctionnant avantageusement à l'énergie électrique).

Ce circulateur 7 est choisi en fonction du débit d'eau recherché, de préférence pour obtenir une filtration du volume total de l'eau du bassin de la piscine plusieurs fois par jour.

Ce circulateur 7 est en l'espèce agencé de sorte que son entrée d'aspiration 71 soit orientée vers la paroi verticale latérale 63. Cet agencement vise ainsi à participer au faible encombrement en largeur du module hydraulique 5.

Les moyens de traitement 8 consistent par exemple en :
- un régulateur de pH,
- un contrôleur Redox,
- un électrolyseur,
- un distributeur automatique de produit de traitement (désinfectant, etc.).

Ces moyens de traitement 8 sont avantageusement portés par la paroi verticale arrière 62 (en l'espèce sa face intérieure) équipant le châssis support 6.

La vanne multivoies 9 consiste avantageusement en une vanne quatre ou six voies.

Cette vanne multivoies 9 comporte plusieurs positions qui seront détaillés par la suite :
- pour une vanne quatre voies, les positions possibles sont de préférence les positions filtration, lavage, circulation et rinçage, et
- pour une vanne six voies, s'ajoutent la position fermée et la position mise à l'égout.

Pour un encombrement minimal, cette vanne multivoies 9 est avantageusement sus-jacente (au-dessus) du circulateur 7.

Cette vanne multivoies 9 est ici portée par la paroi verticale arrière 62 (en l'espèce par la face intérieure de cette dernière). De manière alternative ou complémentaire, la vanne multivoies 9 peut être portée par le circulateur 7.

Les conduites hydrauliques 10 sont adaptées à une circulation d'eau entre les composants hydrauliques 7, 8, 9 du module hydraulique 5 et à être connectées aux canalisations 2 précitées.

Plusieurs des conduites hydrauliques 10 de ce module hydraulique 5 sont terminées par un organe de raccordement 11 qui est adapté à être connecté à l'une des canalisations 2 du circuit hydraulique 1.

Par « organe de raccordement », on entend avantageusement un organe de raccordement destiné à être connecté, de manière étanche au fluide, avec un organe de raccordement complémentaire équipant une extrémité d'une canalisation 2 du circuit hydraulique 1.

Cet organe de raccordement 11 consiste par exemple en un raccord de plomberie (par exemple plastique ou métallique) comportant un filet de vis, classique en soi.

Ces conduites hydrauliques 10 comprennent ici :
- des conduites hydrauliques d'aspiration 101, parallèles, raccordées au circulateur 7 (elles se rejoignent au niveau d'une entrée commune), et qui comportent chacune un organe de raccordement 111 destiné à être raccordé à une canalisation d'aspiration 21 du circuit hydraulique 2,
- des conduites hydrauliques de refoulement 102, parallèles, raccordées à la vanne multivoies 9, dont les organes de raccordement 112 sont destinés à être raccordés aux canalisations de refoulement 22 du circuit hydraulique 2,
- un premier couple de conduites hydrauliques 103 raccordées à la vanne multivoies 9, dont les organes de raccordement 113 sont destinés à être raccordés aux canalisations aller / retour 23 équipées des moyens de filtration 3 du circuit hydraulique 2,
- un second couple de conduites hydrauliques 104 raccordées à la vanne multivoies 9 et aux conduites hydrauliques de refoulement 102, dont les organes de raccordement 114 sont destinés à être raccordés aux canalisations aller / retour 24 équipées des moyens de chauffage 4 du circuit hydraulique 2,
- au moins une conduite hydraulique 105 raccordée à la vanne multivoies 9, dont l'organe de raccordement 115 est destiné à être raccordé à la canalisation de vidange 25 du circuit hydraulique 2 (mise à l'égout), et
- une conduit de jonction 106 raccordant le circulateur 7 et la vanne multivoies 9.

En l'espèce, au niveau du second couple de conduites hydrauliques 104 :
- une première conduite hydraulique 1041, aller, est raccordée à la vanne multivoies 9 et
- une seconde conduite hydraulique 1042, retour, est raccordée aux conduites hydrauliques de refoulement 102.

Les conduites hydrauliques de refoulement 102 sont ainsi raccordées à la vanne multivoies 9 via le second couple de conduites hydrauliques 104 destiné à être raccordé aux moyens de chauffage 4 du circuit hydraulique 2.

Ces première et seconde conduites hydrauliques 1041, 1042 sont raccordées par une troisième conduite hydraulique 1043.

Cette troisième conduite hydraulique 1043 est équipée ici d'une vanne 1044 pilotable (manuellement ou motorisée) entre deux positions :
- une position fermée, pour assurer la circulation de l'eau au travers des moyens de chauffage 4, et
- une position ouverte (voire semi-ouverte), pour assurer une dérivation par rapport à ces moyens de chauffage 4.

De manière générale, les organes de raccordement 11 sont agencés, au moins approximativement, dans un même plan vertical.

Ces organes de raccordement 11 débouchent ici au travers d'orifices 631 qui sont ménagés au travers de la paroi verticale latérale 63 et qui sont répartis au niveau de cette paroi verticale latérale 63.

Pour être complet, le module hydraulique 5 comporte encore avantageusement un tableau de commande 15, électrique, pour le pilotage du circuit hydraulique 2.

Ce tableau de commande 15 comporte ainsi avantageusement :
- un interrupteur offrant la possibilité de choisir le mode de fonctionnement du circulateur 7 et en corollaire de la filtration (manuel, automatique ou arrêt), et
- des moyens de programmation, pour programmer les cycles de filtration.

Ce tableau de commande 15 est avantageusement porté par la paroi verticale arrière 62 (en l'espèce sa face intérieure) équipant le châssis support 6.

En pratique, le module hydraulique 5 est pré-monté sur son site de fabrication.

A cet effet, les parties 61, 62, 63 du châssis support 6 sont assemblées.

Puis les différents composants hydrauliques (circulateur 7, moyens de traitement 8, vanne multivoies 9) sont rapportés sur ce châssis support 6 et sont raccordés hydrauliquement au moyen des conduites hydrauliques 10.

Les conduites hydrauliques 10 sont également équipées des organes de raccordement 11 qui sont convenablement agencés au travers des différents orifices 631 de la paroi verticale latérale 63.

De même, le tableau de commande 15 est raccordé électriquement au circulateur 7 et aux moyens de traitement 8.

Une fois pré-monté, le module hydraulique 5 peut être transporté jusqu'à son site final d'installation, à côté du bassin de piscine P.

Grâce à son faible encombrement, le module hydraulique 5 peut être implanté dans un local technique, après être passé au travers de l'ouverture de sa porte.

Ce module hydraulique 5 peut être posé directement sur le sol (formé par exemple par une chape en béton), par le biais de son embase 61.

Ce module hydraulique 5 peut ensuite être raccordé convenablement, d'une part, aux différentes canalisations 21, 22, 23, 24 et 25 du circuit hydraulique 2 du bassin de piscine P et, d'autre part, à une alimentation électrique pour le fonctionnement du circulateur 7 et du tableau de commande 15.

En l'espèce, le raccordement hydraulique au circuit hydraulique 2 est facilité par les organes de raccordement 11 du module hydraulique 5 qui sont regroupés au niveau de la paroi verticale latérale 63.

Les moyens de filtration 3 et les moyens de chauffage 4 sont ainsi déportés par rapport au module hydraulique 5, tout en étant raccordés hydrauliquement par les différentes canalisations 23 et 24 prévues à cet effet.

A ce sujet, les moyens de filtration 3 peuvent être installés à façon, indépendamment du module hydraulique 5.

En fonctionnement, le tableau de commande 15 pilote notamment le fonctionnement du circulateur 7.

Lorsque le circulateur 7 est en marche, l'eau va circuler dans certaines des conduites hydrauliques 10 du module hydraulique 5 et dans les canalisations 21, 22, 23, 24 et 25 associées du circuit hydraulique 2.

De manière générale, en fonctionnement normal (vanne multivoies 9 en position « filtration »), l'eau va suivre la boucle suivante :
- aspiration au niveau des bouches d'aspiration 211,
- circulation le long des canalisations d'aspiration 21, jusqu'au module hydraulique 5,
- circulation dans le module hydraulique 5, au travers du circulateur 7 et de la vanne multivoies 9, depuis les organes de raccordement 111 des conduites hydrauliques d'aspiration 101 jusqu'à un premier des organes de raccordement 113 du premier couple de conduites hydrauliques 103,
- circulation au travers des moyens de filtration 3, en dehors du module hydraulique 5, via les canalisations aller / retour 23,
- nouvelle circulation dans le module hydraulique 5, au travers de la vanne multivoies 9, depuis un second des organes de raccordement 113 du premier couple de conduites hydrauliques 103 jusqu'à un premier des organes de raccordement 114 du second couple de conduites hydrauliques 104,
- circulation au travers des moyens de chauffage 4, en dehors du module hydraulique 5, via les canalisations aller / retour 24,
- nouvelle circulation dans le module hydraulique 5, le long de la conduite hydraulique retour du second couple de conduites hydrauliques 104 puis des conduites hydrauliques de refoulement 102, depuis un second des organes de raccordement 114 du second couple de conduites hydrauliques 104 jusqu'aux organes de raccordement 112 desdites conduites hydrauliques de refoulement 102,
- retour au bassin de piscine P par une circulation le long des canalisations de refoulement 22, jusqu'aux buses de refoulement 221.

Par ailleurs, les positions de la vanne multivoies 9 sont en substance les suivantes :
- une position « fermée » (ou « close ») indique la fermeture complète de la vanne multivoies 9 (il n'y a pas de circulation d'eau dans les moyens de filtration 3) ;
- une position « filtration » (ou « filter ») est le positionnement habituel de fonctionnement pour filtrer l'eau du bassin de piscine, de sorte que l'eau circule dans le filtre de haut en bas à travers la masse filtrante ;
- une position « lavage » (ou « backwash ») permet de nettoyer et de décolmater les moyens de filtration 3 (le sens de l'eau est inversé par rapport à la position filtration) ;
- une position « rinçage » (ou « rinse ») permet le lessivage des canalisations après un lavage, et élimine vers l'égout les impuretés qui pourraient s'être déposées ;
- une position « circulation » (ou « recirculate ») isole le filtre de sorte que l'eau rentre dans la vanne multivoies 9 et ressort directement vers le bassin de piscine P ;
- une position « mise à l'égout » (ou « waste ») permet la vidange du bassin de piscine P quand il est trop plein, ou lorsque l'eau est très sale, pour envoyer directement à l'égout sans passer par les moyens de filtration 3.

## Revendications

1. Module hydraulique, formant un accessoire pour le circuit hydraulique d'une piscine, ledit circuit hydraulique (2) comprenant des canalisations (21, 22, 23, 24, 25) et des moyens de filtration (3) pour l'eau du bassin de piscine,
lequel module hydraulique (5), dépourvu desdits moyens de filtration (3), comprend un châssis support (6) sur lequel sont regroupés :
- un circulateur (7), destiné à générer une circulation d'eau dans ledit circuit hydraulique (2),
- une vanne multivoies (9), destinée à orienter la circulation dans ledit circuit hydraulique (2),
- des conduites hydrauliques (10), qui sont chacune terminées par un organe de raccordement (11) adapté à être connecté auxdites canalisations (21, 22, 23, 24, 25), le châssis support (6) comporte une embase (61) qui forme un piètement adapté à reposer sur le sol et qui porte ledit circulateur (7),
lequel châssis support (6) comporte une paroi verticale arrière (62), et laquelle vanne multivoies (9) est portée par ladite paroi verticale arrière (62) et/ou ledit circulateur (7),
lesquels organes de raccordement (11) sont agencés, au moins approximativement, dans un même plan vertical,
lesquels conduites hydrauliques (10) comprennent :
- au moins une conduite hydraulique (101) raccordée au circulateur (7), dont l'organe de raccordement (111) est destiné à être raccordé à une canalisation d'aspiration (21) du circuit hydraulique (2),
- au moins une conduite hydraulique (102) dont l'organe de raccordement (112) est destiné à être raccordé à une canalisation de refoulement (22) du circuit hydraulique (2),
- deux conduites hydrauliques (103) raccordées à la vanne multivoies (9), dont les organes de raccordement (113) sont destinés à être raccordés aux canalisations (23) aller / retour équipées des moyens de filtration (3) du circuit hydraulique (2),
- au moins une conduite hydraulique (105) raccordée à la vanne multivoies (9), dont l'organe de raccordement (115) est destiné à être raccordé à une canalisation de vidange (25) du circuit hydraulique (2).

2. Module hydraulique selon la revendication 1, en ce que le châssis support (6) comporte une paroi verticale latérale (63), et en ce que les organes de raccordement (11) débouchent au travers d'orifices (631) qui sont répartis au niveau de ladite paroi verticale latérale (63).

3. Module hydraulique selon l'une quelconque des revendications 1 ou 2, destiné à équiper le circuit hydraulique (2) d'une piscine comprenant des moyens de chauffage (4), **caractérisé en ce que** ledit module hydraulique (5) comporte deux conduites hydrauliques (104) dont les organes de raccordement (114) sont destinés à être raccordés à des canalisations (24) aller / retour équipés desdits moyens de chauffage (4).

4. Module hydraulique selon l'une quelconque des revendications 1 à 3, en ce qu'il comporte encore :
- un tableau de commande (15), pour le pilotage dudit circuit hydraulique (2), et/ou
- des moyens de traitement de l'eau (8), pour des traitements autres que la filtration,
porté(s) avantageusement par une paroi verticale arrière (62) équipant le châssis support (6).

5. Module hydraulique selon l'une quelconque des revendications 1 à 4, en ce que le module hydraulique s'inscrit dans un encombrement horizontal rectangulaire dont les cotes sont au maximum de 0,7 m sur 1 m.

6. Circuit hydraulique pour une piscine, comprenant :
- des canalisations (21, 22, 23, 24, 25),
- un module hydraulique (5) selon l'une quelconque des revendications 1 à 5, raccordé auxdites canalisations (21, 22, 23, 24, 25),
- des moyens de filtration (3) de l'eau du bassin de piscine, déportés par rapport audit module hydraulique (5), et
- éventuellement des moyens de chauffage (4), déportés par rapport audit module hydraulique (5).

## Patentansprüche

1. Hydraulikmodul, das ein Zubehörteil für den Hydraulikkreislauf eines Schwimmbads bildet, wobei der Hydraulikkreislauf (2) Kanalisationen (21, 22, 23, 24, 25) und Filtermittel (3) für das Wasser des Schwimmbads aufweist,
wobei das Hydraulikmodul (5) ohne die Filtermittel (3) ein Trägerchassis (6) aufweist, auf dem
- ein Umwälzgerät (7), das dazu bestimmt ist, einen Wasserumlauf in dem Hydraulikkreislauf (2) zu erzeugen,
- ein Mehrwegeventil (9), das dazu bestimmt ist, den Kreislauf im Hydraulikkreislauf (2) zu orientieren,
- Hydraulikleitungen (10), die jeweils mit einem Anschlußorgan (11) enden, das für den Anschluß an die Kanalisationen (21, 22, 23, 24, 25) ausgelegt ist, zusammen angeordnet sind,
wobei das Trägerchassis (6) einen Sockel (61) aufweist, der ein Gestell bildet, das zum Ruhen auf dem Boden ausgelegt ist und das das Umwälzgerät (7) trägt,
wobei das Trägerchassis (6) eine vertikale Rückwand (62) aufweist und das Mehrwegeventil (9) von der vertikalen Rückwand (62) und/oder vom Umwälzgerät (7) getragen wird,
wobei die Anschlußorgane (11) wenigstens näherungsweise in ein und derselben senkrechten Ebene angeordnet sind,
wobei die Hydraulikleitungen (10)
- mindestens eine an das Umwälzgerät (7) angeschlossene Hydraulikleitung (101), deren Anschlußorgan (111) dazu bestimmt ist, an einen Ansaugkanal (21) des Hydraulikkreislaufs (2) angeschlossen zu werden,
- mindestens eine Hydraulikleitung (102), deren Anschlußorgan (112) dazu bestimmt ist, an einen Rückflußkanal (22) des Hydraulikkreislaufs (2) angeschlossen zu werden,
- zwei mit dem Mehrwegeventil (9) verbundene Hydraulikleitungen (103), deren Anschlußorgane (113) dazu bestimmt sind, an die mit Filtermitteln (3) des Hydraulikkreislaufs (2) versehenen Hin- und Rückkanäle (23) angeschlossen zu werden,
- mindestens eine mit dem Mehrwegeventil (9) verbundene Hydraulikleitung (105), deren Anschlußorgan (115) dazu bestimmt ist, an einen Entleerungskanal (25) des Hydraulikkreises (2) angeschlossen zu werden,
aufweisen.

2. Hydraulikmodul gemäß Anspruch 1, wobei das Trägerchassis (6) eine vertikale Seitenwand (63) aufweist und wobei die Anschlußorgane (11) durch Löcher (631) hindurchtreten, die über die vertikale Seitenwand (63) verteilt sind.

3. Hydraulikmodul gemäß einem der Ansprüche 1 oder 2, das dazu bestimmt ist, den Hydraulikkreislauf (2) eines Heizmittel (4) aufweisenden Schwimmbads auszustatten, **dadurch gekennzeichnet, daß** das Hydraulikmodul (5) zwei Hydraulikleitungen (104) aufweist, deren Anschlußorgane (114) dazu bestimmt sind, an mit den Heizmitteln (4) ausgestattete Hin- und Rückkanäle (24) angeschlossen zu werden.

4. Hydraulikmodul gemäß einem der Ansprüche 1 bis 3, das außerdem
- eine Steuertafel (15) zum Steuern des Hydraulikkreislaufs (2) und/oder
- Mittel (8) zum Aufbereiten des Wassers für andere Verfahren als das Filtern aufweist,
das bzw. die vorteilhafterweise von einer das Trägerchassis (6) ausstattenden senkrechten Rückwand (62) getragen wird bzw. werden.

5. Hydraulikmodul gemäß einem der Ansprüche 1 bis 4, wobei das Hydraulikmodul einen horizontalen rechteckigen Platzbedarf aufweist, dessen Seiten höchstens 0,7 m x 1 m groß sind.

6. Hydraulikkreislauf für ein Schwimmbad mit
- Kanalisationen (21, 22, 23, 24, 25),
- einem an die Kanalisationen (21, 22, 23, 24, 25) angeschlossenen Hydraulikmodul (5) gemäß einem der Ansprüche 1 bis 5,
- gegenüber dem Hydraulikmodul (5) versetzten Mitteln (3) zum Filtern des Wassers des Schwimmbeckens und
- eventuell Heizmitteln (4), die gegenüber dem Hydraulikmodul (5) versetzt sind.

## Claims

1. A hydraulic module, forming an accessory for the hydraulic circuit of a swimming pool, said hydraulic circuit (2) comprising pipes (21, 22, 23, 24, 25) and means (3) for filtering the pool water,
said hydraulic module (5), devoid of said filtration means (3), comprises a support frame (6) on which are grouped:
- a circulator (7), intended to generate water circulation in said hydraulic circuit (2),
- a multi-way valve (9), intended to direct the circulation within said hydraulic circuit (2),
- hydraulic lines (10), each ended by a connecting member (11) suitable to be connected to said pipes (21, 22, 23, 24, 25),
the support frame (6) including a base (61) that forms a pedestal adapted to rest on the ground and that carries said circulator (7),
the support frame (6) including a rear vertical wall (62), and said multi-way valve (9) being carried by said rear vertical wall (62) and/or said circulator (7),
the connecting members (11) being arranged, at least approximately, in a same vertical plane, the hydraulic lines (10) comprising:
- at least one hydraulic line (101) connected to the circulator (7), the connecting member (111) of which is intended to be connected to a suction line (21) of the hydraulic circuit (2),
- at least one hydraulic line (102), the connecting member (112) of which is intended to be connected to a discharge line (22) of the hydraulic circuit (2),
- two hydraulic lines (103) connected to the multi-way valve (9), the connecting members (113) of which are intended to be connected to the flow / return pipes (23) fitted with the filtration means (3) of the hydraulic circuit (2),
- at least one hydraulic line (105) connected to the multi-way valve (9), the connecting member (115) of which is intended to be connected to a draining line (25) of the hydraulic circuit (2).

2. The hydraulic module according to claim 1, in that the support frame (6) includes a lateral vertical wall (63) and in that the connecting members (11) open out through orifices (631) that are distributed over said lateral vertical wall (63).

3. The hydraulic module according to any one of claims 1 or 2, intended to be fitted on the hydraulic circuit (2) of a swimming pool comprising heating means (4), **characterized in that** said hydraulic module (5) includes two hydraulic pipes (104), the connecting members (114) of which are intended to be connected to flow / return pipes (24) fitted with said heating means (4).

4. The hydraulic module according to any one of claims 1 to 3, in that it further includes:
- a control panel (15) for controlling said hydraulic circuit (2), and/or
- water treatment means (8), for other treatments than filtration,
advantageously carried by a rear vertical wall (62) fitted on the support frame (6).

5. The hydraulic module according to any one of claims 1 to 4, in that the hydraulic module fits into a rectangular horizontal footprint with maximum dimensions of 0.7 m by 1 m.

6. A hydraulic circuit for a swimming pool, comprising:
- pipes (21, 22, 23, 24, 25),
- a hydraulic module (5) according to any one of claims 1 to 5, connected to said pipes (21, 22, 23, 24, 25),
- means (3) for filtering the pool water, offset with respect to said hydraulic module (5), and
- possibly heating means (4), offset with respect to said hydraulic module (5).
